(19) Europäisches Patentamt
European Patent Office
Office européen des brevets

(11)  **EP 3 465 870 B1**

(12)  **EUROPEAN PATENT SPECIFICATION**

(45) Date of publication and mention
of the grant of the patent:
**14.07.2021   Bulletin 2021/28**

(51) Int Cl.:
*H02J 50/10* *(2016.01)*

(21) Application number: **17728947.7**

(22) Date of filing: **23.05.2017**

(86) International application number:
**PCT/NL2017/050323**

(87) International publication number:
**WO 2017/204629 (30.11.2017 Gazette 2017/48)**

(54) **A METHOD, A CONTROLLER AND A NETWORK**

VERFAHREN, STEUERGERÄT UND NETZWERK

PROCÉDÉ, DISPOSITIF DE COMMANDE ET RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **23.05.2016   NL 2016810**

(43) Date of publication of application:
**10.04.2019   Bulletin 2019/15**

(73) Proprietor: **Optimos Apto B.V.
1054 VN Amsterdam (NL)**

(72) Inventor: **VAN DER PIJL, Frederik Frank Arie
1054 VN AMSTERDAM (NL)**

(74) Representative: **Grootscholten, Johannes A.M. et
al
Arnold & Siedsma
Bezuidenhoutseweg 57
2594 AC The Hague (NL)**

(56) References cited:
**EP-A1- 0 587 923        EP-A2- 0 264 135
WO-A1-2008/149275    US-A1- 2007 236 159**

• **Frank F. A. Van Der Pijl ET AL: "Adaptive
Sliding-Mode Control for a Multiple-User
Inductive Power Transfer System Without Need
for Communication", IEEE TRANSACTIONS ON
INDUSTRIAL ELECTRONICS., vol. 60, no. 1, 18
February 2012 (2012-02-18), pages 271-279,
XP055653797, USA ISSN: 0278-0046, DOI:
10.1109/TIE.2012.2200209**

**Description**

The present disclosure relates to a method, a controller and a network as set out in the appended claims.

Prior art according to WO-2011/031143 is acknowledged here. Therein, determination of a fixed relation between energy in a source and energy stored in a network is disclosed. The prior art is rigid and not sufficiently flexible to cope with loads and sources being added or removed. Moreover, by basing the approach of this prior art on a heaviest possible accumulated load ($\sum P_0$), efficiency could be improved on and losses reduced.

It is acknowledged here that WO-2008/149275 discloses a prior art method and system. However, at least the features in the characterizing portion of the appended independent claim are novel over this prior art.

The present disclosure teaches adaptively balancing energy of the source ($E_{source}$) against energy in the network ($E_{network}$). According to the present disclosure, balancing is achieved by the steps in the characterizing portion of the appended independent method claim. Thereby, by willfully and continuously or iteratively, adapting a value of a balance factor $\alpha$ in $\alpha * E_{source} = E_{network}$, the invention allows for ascertaining the effect in terms of approximation of a desired maximal minimum of $\alpha$, and progressively adapting this $\alpha$ towards the desired maximal minimum value. A control input ($u_p$) is varied, instead of directly the balance factor (a), under an assumption that

$$\overline{u_p}^{2} \cdot \alpha \equiv constant$$

as set out herein below in deductions resulting in equation 25.

A source could be considered required, but a load node may also verify, upon connection to a network, if any source or sufficient source capacity is available. Further, a number of loads can include no loads being connected to the network.

Advantageous embodiments according to the invention are described in the appended dependent claims. More detailed information on the present disclosure is provided below.

By way of example only, embodiments of the present invention will be described herein below, with reference to the accompanying figures in which

Fig. 1 shows a schematic perspective view of an electric supply network according to the invention;
Fig. 2 shows a schematic view of a part of the electric supply network of Fig. 1;
Fig. 3 shows a simple electric scheme of the partial electric supply network of Fig. 2;
Fig. 4 shows a more detailed electric scheme of the partial electric supply network of Fig. 2;
Fig. 5 a more schematic representation of the configuration according to figure 4;
Fig. 6 shows an inductive connection of a load to the electric supply network of Fig. 1;
Fig. 7 shows a number of energy plots;
Fig. 8 shows a flow chart of a prior method;
Fig. 9 exemplifies switch behavior;
Fig. 10 exhibits an exemplary flexible network with more freely connectable loads and at least one and possibly more than one source;
Fig.'s 11-17 exemplify graphs and curves for explaining considerations underlying the present disclosure;
Fig.'s 18 and 19 exemplify characteristics of a network current or a voltage over a resonant capacitor.

The figures are merely schematic views of preferred embodiments according to the present disclosure. In the figures, the same reference numbers may refer to the same and/or corresponding parts.

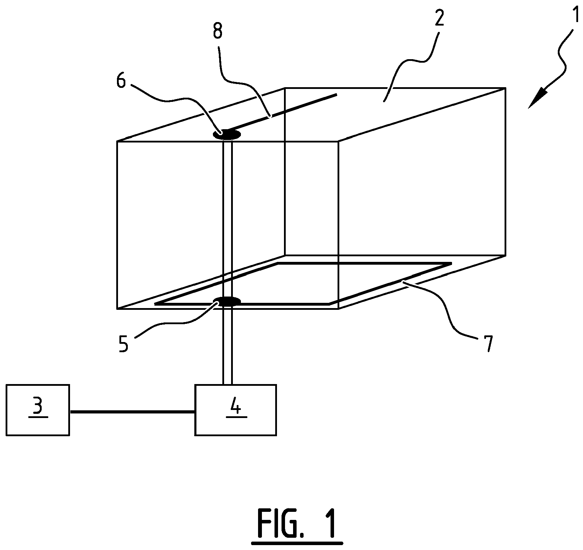

Figure 1 shows a schematic perspective view of an electric supply network 1 arranged in a rectangular shaped chamber 2. Via a monitoring element 4 the network 1 is connected to a grid point 3 of a public electric power supply system. From the monitoring element 4, a mains line extends towards the chamber 2. The mains line includes distribution points 5, 6 branching off electric supply lines 7, 8 that are located near the floor and the ceiling respectively. Electric loads, such as domestic electrical appliances, can be connected to the electric supply lines 7, 8 in an inductive manner, as explained in more detail below.

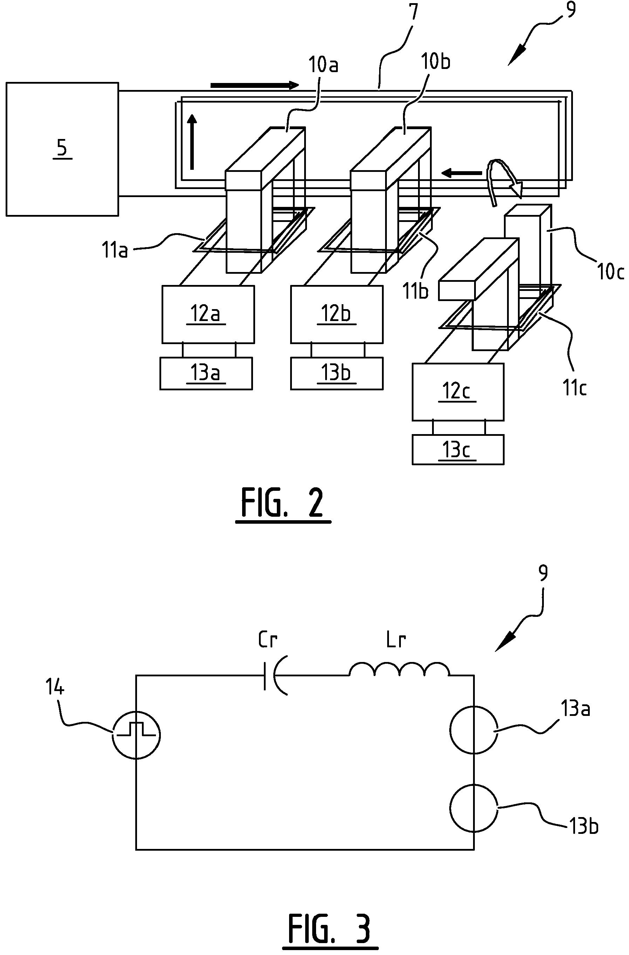

Figure 2 shows a schematic view of a part 9 of the electric supply network 1. Here, a distribution point 5 is connected to an electric supply line 7 at the floor of the chamber 2. The distribution point 5 includes a capacitor that is arranged in series with the electric supply line 7. The electric supply line 7 is formed as an electrically conducting wire in a closed loop, so that the line 7 and the capacitor form a resonance circuit, also called LC-circuit or resonant tank. The distribution point 5 also includes a converter for converting electrical energy from the electrical source, e.g. a harmonic 50 Hz signal, into electrical energy having a central frequency at the resonance frequency of the resonant tank. The converter comprises an adaptive controller according to the invention for controlling energy supplied by an electrical source, viz. from the grid point 3, to the resonant tank connectable to an electric load.

In order to connect an electrical load to the electric supply line 7, a magnetic ferrite kernel 10a-c can be shifted around a section of the electric supply line 7 that forms a primary coil. Through the opening of the magnetic ferrite kernel 10a-c also a secondary coil 11a-c extends so that a transformer element is formed. The secondary coil 11a-c is connected to an output converter 12a-c for converting the resonance signal to a harmonic signal that is suitable for powering the electrical load 13a-c, viz. a 230 V, 50 Hz signal. Since the electrical load 13a-c is inductively connected, there is no danger for an electrical short cut.

Figure 3 shows a simple electric scheme of the partial electric supply network 9. Here, the resonant power converter including the controller for controlling electrical energy supplied to the resonant tank is represented by a controlled electrical source 14. Further, the capacitor $C_r$, included in the grid point 5, is shown as well as the inductor $L_r$ representing the coil 7. The resonant tank $C_r$, $L_r$ is connected in series with electrical loads 13a-b. Obviously, also another number of electrical loads might be connected to the resonant tank, e.g. a single load or three loads.

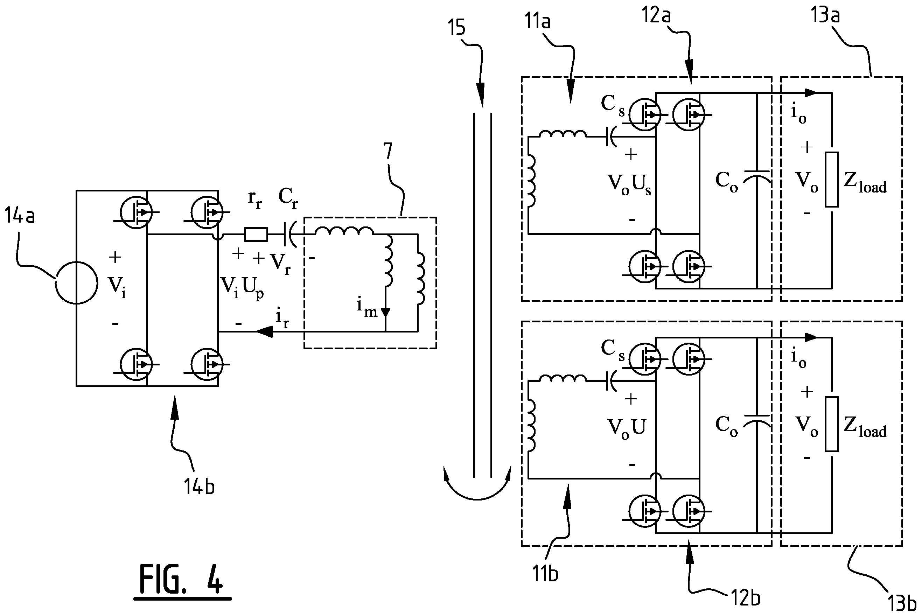

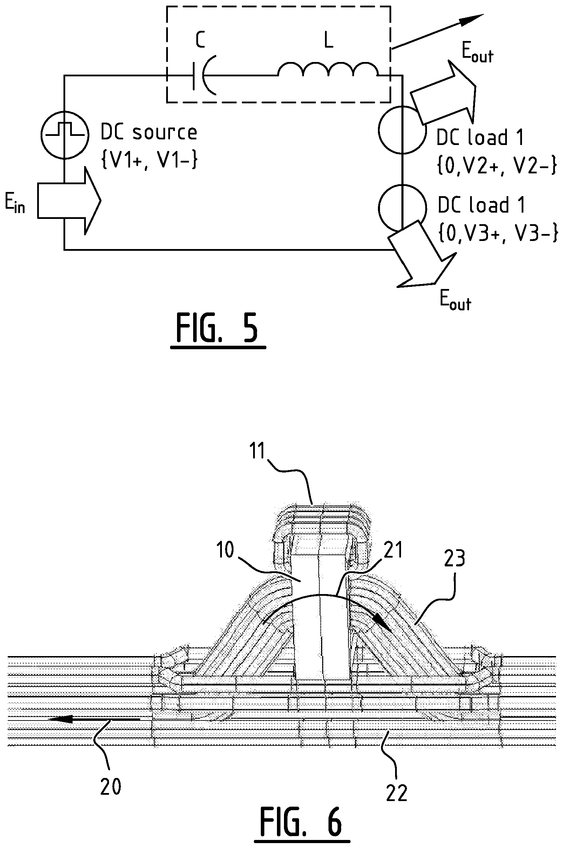

Figure 4 shows a more detailed electric scheme of the partial electric supply network 9 and figure 5 exemplified a further simplified representation thereof. The inductance representing the electric supply line is replaced by a more complex inductor circuit 7 while the controlled electrical source 14 is separated in an electrical source 14a and a converter including a switching stage 14b and the controller for controlling the energy supplied to the resonant tank. The switching stage 14b is interconnected between terminals of the electrical source 14a and the resonant tank, respectively. The controller drives switching stage 14b switching elements, e.g. semiconductor switches, preferably high power MOSFET switches. At the load side, the output converter 12a-b includes a switching stage that is controlled to generate a desired electrical signal from the resonance signal in the resonant tank. The secondary coil 11a is inductively connected to the primary coil via a magnetic coupling 15.

Figure 6 shows an exemplary inductive connection of a load to the electric supply network 1. Advantageously, the coil of the electric supply line 7 has an elongated structure such that an offset between electrically conducting elements of the coil is small with respect to the length of said conducting elements, so that magnetic fields by the individual electrically conducting elements mutually substantially cancel. In the shown embodiment in Fig. 5, a first section 22 of the coil including conducting elements wherein, during use, electrical currents flow in a particular direction 20, surround a second section 23 of the coil including conducting elements wherein electrical currents flow in an opposite direction 21. By arranging the coil in such a way, a first section 22 of conducting elements or wires surround a second section 21 of conducting elements or wires, and a net magnetic field outside the electric supply line 7 substantially vanish. Further, the electric supply line 7 can be split, e.g. by using a clamp, at least locally, so that the inner section 21 of conducting elements or wires can be pulled locally out of the surrounding outer section 22 of elements. The magnetic ferrite kernel 10 can then be moved between the first and second section of the primary coil, so that the magnetic field can be coupled to the secondary coil 11.

During operation of the adaptive controller according to the invention, information of energy in the resonant tank is used as a basis for determining an energy amount to be supplied to the resonant tank.

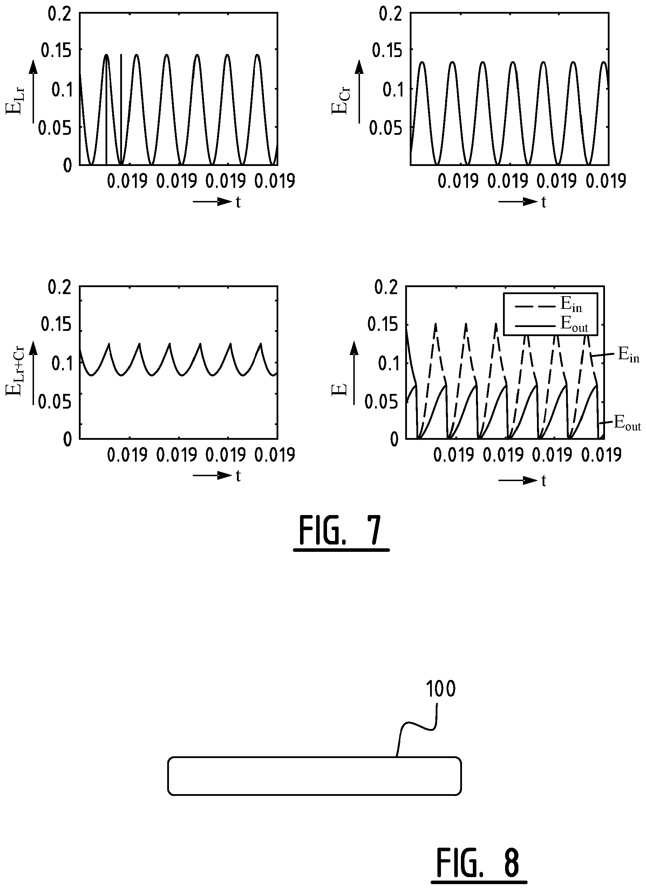

Figure 7 shows a number of energy plots associated with energy in the resonant tank ($E_{Lr}$ + $E_{Cr}$) as a function of time. The upper left plot shows the inductive energy $E_{Lr}$ as a function of time t. Similarly, the upper right plot shows the capacitive energy $E_{Cr}$ as a function of time t. The lower left plot shows the total energy (inductive energy $E_{Lr}$ added to capacitive energy $E_{Cr}$) as a function of time. As expected, the total energy is mainly constant meeting an ideal situation wherein the amount of energy that is input to the resonant tank is equal to the energy that is output to the loads. The right lower graph of figure 7 exemplifies energy supplied by the source ($E_{in}$) and energy absorbed by the loads ($E_{out}$) changing in time. Due to a disturbance with respect to the ideal situation, a seemingly harmonic ripple is present in the total energy, as exemplified in the left lower graph of figure 7. The lower right plot shows the energy $E_{in}$ (dashed line) that is input to the tank and the energy $E_{out}$ (solid line) that is output from the tank.

It is noted that the ripple in the total energy is associated with an instantaneous buffer component of the resonant tank energy. In the process of controlling an amount of energy to be supplied to the tank, the instantaneous buffer component might be set strictly positive while the component is also minimized. Thus, the energy buffer component is used as a basis of information of energy in the resonant tank for the purpose of determining an energy amount to be supplied to the resonant tank. Advantageously, a filtered increase of resonant tank energy is integrated and subsequently controlled to a value depending on energy supplied to the resonant tank. As an example, said value might be related to the supplied energy in a linear or quadratic way. Depending on a particular application, a proper relation of said value with the supplied energy can be established. Further, the time scale of the filtering process is then different, preferably larger than the time scale of the integrating process, so that a filtered increase of the instantaneous energy buffer component is integrated and related to said value depending on energy supplied to the resonant tank.

Resonant tank energy information can be determined by measuring at least one physical parameter associated with the resonant tank, e.g. an electrical current and/or an electrical voltage.

A control objective, such as relating a filtered increase of resonant tank energy to a value depending on energy supplied to the resonant tank, can be implemented in various ways, e.g. depending on the converter type and switch stage type. As an example, pulse width modulation (PWM), phase-shift modulation (PSM) or frequency modulation (FM) can be employed. Also a combination is possible. As a further example, a quantum conversion (QC) modulation method can be used wherein the modulation is controlled synchronous with the resonance frequency of the resonant tank.

Further, different control algorithms can be applied, both linear and non-linear. As an example, a controller based on sliding-mode control theory is explained in more detail below. In order to arrive at a specific controlling method, one or more control objects have to be rewritten as a valid sliding surface.

In a state-space annotation, the configuration of figures 4 and 5 may be expressed as follows:

$$\frac{\pi^2}{4} L_r \frac{d\overline{i_r}}{dt} = V_i \overline{u_p} - r_r \overline{i_r} - \overline{v_o u_s} \tag{1a}$$

$$C_o \frac{d\overline{v_o}}{dt} = \frac{\overline{i_r}}{n} \overline{u_s} - \overline{i_o} \tag{1b}$$

It is intended to transport energy from the source 14a, $V_i$ in figures 4 and 5 to the load(s) as efficiently as possible. Power control may be achieved by appropriate driving of switching stage 14b. Clamps 11a, 11b, 11c all in principle comprise the same configuration, for example in terms of the switch stage applied therein. The system as a whole, comprising cable 15, clamps 11, switching stages 12, 14, and other components, such as possibly externally arranged capacitors, may be referred to as an electronic power converter, connected to the resonant source.

By modeling figure 4 into the simplified representation of figure 5, it becomes apparent that monitoring the tank's behavior may result in appropriate control of the tank's output. The resonant tank, modeled by the dashed lines box in figure 5, has relevant information and in any case all information necessary, for tuning input energy $E_{in}$ and the total output energy $\Sigma E_{out}$ (= $E_{clamp\,1}$ + $E_{clamp\ldots}$ . + $E_{clamp\,n}$). Power supplied by the resonant tank and energy stored therein may then be expressed as follows:

$$P_{LC} = v_{C_r} \cdot C_r \frac{dv_{C_r}}{dt} + i_r \cdot L_r \frac{di_r}{dt} \quad [\mathrm{W}] = [\mathrm{J/s}] \tag{1c}$$

$$E_{LC}(t) = \int_0^t \left( v_{C_r} \cdot C \frac{dv_{C_r}}{dt} + i_r \cdot L \frac{di_r}{dt} \right) dt = \frac{1}{2} C_r v_{C_r}(t)^2 + \frac{1}{2} L_r i_r(t)^2 \quad [\mathrm{J}] \tag{1d}$$

The amount of energy $E_{LC}$ in the resonant tank at any given time consists essentially of two components, of which one represents ideal energy transfer at $E_{in} = \Sigma E_{out}$, where the other component is a disturbance of the ideal energy transfer. This disturbance of the ideal transfer is the buffer energy or surplus energy, which may be absorbed back by the source, referred to above in relation to figure 7 as a ripple due to a disturbance.

In principle, buffer energy at any given time can be positive, defining a reserve or buffer, or negative, defining a shortage. However, it's possible to separate the buffer from the "perfect" DC-component, where the idea is to ensure that the buffer component is always positive and thus that sufficient energy is present at all times for the load(s). To avoid this leading to waste of energy, the amount should be as low as possible and at the same time sufficient to avoid that the buffer component becomes negative, in which case control of the buffer component may be or become unstable.

$$\Delta E_{LC}(t) = \frac{\partial E_{LC}(t)}{\partial t} \quad .$$

The buffer component represents an increase of energy in the tank, being

However, this representation is filtered, in which the differentiator t is referred to as being "slow". The filtered

$$\overline{\Delta E_{LC}(t)} \quad .$$

increase may be represented as an average or integrated value

By equating an integral of the filtered energy increase and a positive constant will ensure that the energy component of the buffer remains constant, in which case there will be at all times a surplus of energy for the loads. However, at the same time it is desirable to reduce this surplus to as low a constant value as possible. It has been found that an amplitude of the ripple, referred to above in relation to figure 7, in relation to the constant energy component of the buffer is responsible for how low the constant of the buffer component can be set. The magnitude of the4 ripple superimposed on the average buffer component is then dependent on absolute or total input power. For this reason the buffer component is not just set to just any constant, but to have a relation with the input energy: constant ' $E_{in}$. In summary, the control objective is to set the integrated filtered energy increase in the tank equal to a portion of the input energy. This can be expressed in one of several formulae, such as:

$$\int \overline{\Delta E_{LC}(t)}dt = \text{constante} \cdot \text{E}_{in} \, . \qquad (2a)$$

or, as an alternative:

$$\int \overline{\Delta E_{LC}(t)}dt = \text{constante} \cdot \text{E}_{in}^{2} \qquad (2b)$$

In any case, to arrive at this control objective, it was necessary to understand and utilize, that the resonant tank comprises all the necessary information to tune the source and load(s), without a need for communication across inductive couplings. To this end the integrated change (differentiation) is used on different time scales, because a filter alters the time scale. Normally, integration of a differentiation should yield the original; mathematically not effective operation will have been performed, which is why the different time scales are of the essence.

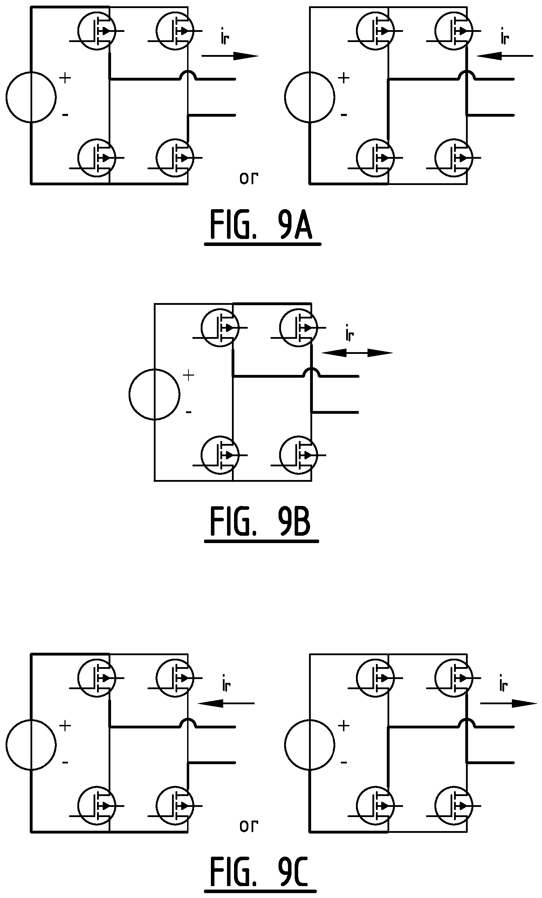

In the configuration of figure 4 relates to a series-resonant converter, of which it is assumed that a single source is provided with a plurality of loads, but the representation of figure 5 allows for more complex configurations forming for example a parallel-resonant converter and/or comprising multiple sources and one or more than one load (see below in relation to figures 9 and higher).

Even implementation of a transformer is not a necessary precondition for implementing the invention according to the present application.

For the switching stages 12, 14, a number of modulation methods are available. Pulse Width Modulation (PWM) allows for "grasping" the input voltage using a fixed frequency, but for example at different times within one period of the frequency, such as at 30% of such a period from a a beginning thereof. Frequency modulation (FM) can "grasp" the input voltage using a variable frequency. Combinations of the two modulations can be considered, as well. A disadvantage of PWM and of FM in current day resonant converters is the control range thereof in terms of power. For this reason an alternative modulation technique has been considered, which is Quantum Conversion (QC). When implementing Quantum Conversion, switching is performed precisely in synch with the resonant frequency of the tank. In theory, the control range is infinite, when implementing Quantum Conversion.

Figure 9 exemplifies switch behavior in conjunction with modulation. Thick lines indicate current flowing and switches along a path of a thick line are conductive or open. All other switches are closed. This relates to the switching stages 12 at source 14a in figure 4. In figure 9a energy is supplied to the circuit, and in figure 9b the source disconnected and output pins are short circuited.

Figure 9c relates to energy flowing back into the source from the circuit.

The modeled configuration of figure 4 is controlled by a power controller to implement the elementary switching modulation method of figure 9, wherein the power controller sets each individual switch to be open or closed.

Several distinct elementary control methods are available, which allow division into several groups, such as linear and non-linear algorithms. An example of a non-linear method is based on so-called "Sliding-Mode Control Theory" (SMCT). Although SMCT is prima facie just one of many linear or non-linear algorithms, that may lead to a workable controller. In the present instance, SMCT is implemented, as it corresponds closely the type of control challenge underlying the present disclosure. SMCT is mainly based on defining a sliding surface to comply with three mathematical conditions, whereby control objectives of formula 2a or of formula 2b are transformed into a valid sliding surface.

The input sliding surface is to relate to the input converter formed by switching stage 14b in figure 4. The switching stages 12 in clamps 13 are also controlled on a basis of an output sliding surface.

Herein below, first a candidate input sliding surface is determined. Then it will be proven when (for which $\alpha$) the candidate sliding surface complies with conditions under the implemented theory. Finally, an exemplary configuration is proposed, and the minimal and therefore optimal $\alpha$ is determined.

A key observation is that the tank transfers energy from one quantum period to the next, although each of the tank components discharges completely during a (quantum) period. Next important observation is the fact that the

resonant inductor $L_r$ can not transfer energy between periods, because by definition a consecutive period starts with zero current, and therefore with an energetic empty resonant inductor. The buffer energy of formula 2a above is developed into:

$$\int \overline{\Delta E_{LC}(t)}dt = \overline{E_{buf}} = \int_0^t \left( v_r \cdot i_r + \left[ i_r \cdot \overset{=0}{\cancel{L \frac{di_r}{dt}}} \right] \right)dt = \overline{v_r i_r} \qquad (3)$$

As schematically indicated at the formula (3) above, the contribution of $i_r \cdot L$ ($di_r/dt$) is negligible and can be approximated as 0 (zero). The right-hand side of (2a) is provided in (4).

$$\overline{E_{buf}} = \alpha' \cdot \overline{E_{in}} \qquad (4)$$

The input sliding surface - related to the input converter - then follows in (5) as the difference of equations (3) and (4).

$$S_{input} = \frac{\omega_c}{s + \omega_c} v_r \, \text{sgn}(i_r)\overline{i_r} - \alpha' \frac{\omega_c}{s + \omega_c} v_{in} \, \text{sgn}(i_r)\overline{i_r} \qquad (5)$$

The purpose of (5) is to become zero, which implies that (5) can be divided by the average of $i_r$.

$$S_{input} = \frac{\omega_c}{s + \omega_c} v_r \, \text{sgn}(i_r) - \frac{\omega_c}{s + \omega_c} \alpha' \cdot v_{in} \, \text{sgn}(i_r) \qquad (6)$$

While surface (6) is the basic sliding surface, a rewritten form is better suited for mathematical analysis. First step is to rewrite the second right hand term in (6) into (7).

$$v_{in} \, \text{sgn}(i_r) \equiv V_{in} u_p \qquad (7)$$

In (7), the DC input voltage is denoted $V_{in}$ and the control input is denoted by $u_p$. The left term is rewritten by noting that

$$\frac{\omega_c}{s + \omega_c} v_r \, \text{sgn}(i_r) \approx C \cdot \overline{i_r} \, , \qquad (8)$$

$$C = \frac{2}{\pi} \cdot \omega_c \cdot C_r \, .$$

where $C$ is a constant dependent on the resonant capacitor value and the angular resonant frequency:

The motivation behind the (close) approximation (8) is that applying the low-pass filter on $v_r \text{sgn}(i_r)$ is equivalent to the average of $i_r$ (up to the constant $C$), when accepting the loss of phase information between voltage and current. Though, one of the strengths of quantum conversion is that phase information is not used at all, because switching occurs only at zero resonant current. If for example the control method would be applied to a different conversion method than quantum conversion (e.g., PWM or FM, see previous paragraph), (8) would not be true.

Substitution of (7) and (8) in sliding surface (6) leads to the rewritten sliding surface (9). Note that phase information is also discarded from the second right hand term by only using the magnitude of the filter.

$$S_p = \overline{i_r} - \alpha' \left| \frac{\omega_c}{s + \omega_c} \right| \frac{u_p}{C_r} V_{in} = \overline{i_r} - \alpha u_p V_{in} \qquad (9)$$

Interpreting (9), the first right hand side term represents the buffer energy in the resonant tank when it is multiplied by the resonant current. The second term represents a fraction $\alpha$ of the supplied energy, when also multiplied by the resonant current. Note that both terms originally contained the same resonant current factor $i_r$, which has been left out of the equation, but the energetic origin of the terms is still clear.

The intuitive reason that (9) 'works' is that the supplied energy reacts little more slowly than the buffer tank energy. For example, adopting the common control law (10), it is clear that the buffer will grow faster than the average supplied energy when $S_p > 0$ and as a result $S_p$ becomes <0, and vice versa.

$$u_p = \begin{cases} 1, & S_p > 0 \\ 0, & S_p < 0 \end{cases} \qquad (10)$$

In the following a formal proof of the validness of (candidate) sliding surface (9) is provided. In sliding-mode control theory the following 3 conditions must be formally met to guarantee stable closed-loop operation: Reaching condition, Existence condition and Stability condition. Reaching considers the fact that the control law must assure to reach the sliding surface (in finite time) starting from all possible initial states. Existence means that the system dynamics must be able to stay at the sliding surface once it is reached. The stability condition considers internal stability of the closed-loop system. Sliding mode control design effectively linearizes the non-linear plant system, but those invisible reminiscent terms must be checked on stability also.

We start with forming the closed-loop system dynamics with the help of the sliding surfaces. First step is to put $S_p$ equal to zero. Rewriting (9) with $S_p = 0$ results in (11).

$$\alpha \omega_c u_p = (s + \omega_c) \overline{i_r} = \frac{d\overline{i_r}}{dt} + \omega_c \overline{i_r} \qquad (11)$$

Substituting for $\dfrac{d\overline{i_r}}{dt}$ in (11) in the averaged state-space model (i.e., (0a) and (0b)) leads to the following expression for $u_p$ in (12). The terms $u_{sj}$ denote the control variables of the output switching bridges.

$$\overline{u_p} = \frac{\left( r_r - \dfrac{\pi^2}{4} \omega_c L_r \right) \overline{i_r} + \sum_{j=1}^{m} \dfrac{v_{ojref}}{n} \overline{u_{sj}}}{v_i - \dfrac{\pi^2}{4} \omega_c L_r \alpha} \qquad (12)$$

Substituting (12) in (0a) leads to a linear first-order -2 differential expression in $\overline{i_r}^2$, which is given in (13).

$$\frac{d\overline{i_r}^2}{dt} = \frac{2\omega_c}{v_i - \dfrac{\pi^2}{4} \omega_c L_r \alpha} \left( \alpha \sum_{j=1}^{m} \left( \frac{1}{2} C_{oj} \frac{dv_{ojref}^2}{dt} + \frac{v_{ojref}^2}{r_{oj}} \right) - (v_i - r_r \alpha) \overline{i_r}^2 \right) \qquad (13)$$

Equation (13) contains the entire dynamics of the closed-loop system. Consulting linear system analysis, stability of the linear system is assured when

$$-\left(v_i - r_r \alpha\right) < 0 \quad \text{and} \quad \frac{2\omega_c}{v_i - \dfrac{\pi^2}{4}\omega_c L_r \alpha} > 0 \; .$$

Rewriting the latter equations leads to the stability condition for $\alpha$ in (14).

$$\alpha < \min\left\{ \frac{v_i}{r_r}, \frac{v_i}{\dfrac{\pi^2}{4}\omega_c L_r} \right\} \qquad (14)$$

This shows the upper bound of $\alpha$ for which the system is stable. Result of choosing $\alpha$ larger than the bound in (14) is an unlimited increase of stored energy in the primary circuit. There is no lower bound from a stability point of view, because we look from the primary side (assuming the secondary side dynamics being situated at the sliding surface) and the system will converge to zero-power throughput in the worst case. See Fig. x2 for an illustration.

The existence conditions will put a lower bound for $\alpha$, in order to assure stable regime; enough input power to supply the secondary sides. For the outputs the existence conditions are straightforward:

$$-1 < u_{sj} < 1 \quad \rightarrow \quad \bar{i}_r > \max_{j=1...n} \left| C_{oj} \frac{dv_{ojref}}{dt} + i_{oj} \right| \qquad (15)$$

Condition (15) simply states that the input current must be larger than load current plus the current through the output filter capacitor.

The input existence condition is the most interesting one. The conditions follow from the fact that the equivalent input control parameter must be between 0 and 1: 0< $u_{p,eq}$ <1. Setting the equivalent input larger than 0 leads to (16).

$$r_r > \frac{\pi^2}{4}\omega_c L_r \qquad (16)$$

Note that in (16) the radial frequency is the cut-off frequency of the low-pass filter and not the resonant frequency. Equation (16) reflects the idea that the 'filtered' impedance of the averaged resonant tank must be smaller than the loss resistance in order to have enough real damping. In other words, the resonant tank must be able to release its energy fast enough.

The remaining condition, $u_{p,eq}$ <1, reveals when the buffer-energy percentage in the resonant tank is enough to assure local stability. Substituting for $u_{p,eq}$ the expression in (12) and rewriting, the final condition follows in (17).

$$\left( v_i + \frac{\pi^2}{4}\omega_c L_r \bar{i}_r \right)\bar{i}_r >$$
$$\left( r_r \bar{i}_r + \frac{\pi^2}{4}\omega_c L_r \alpha \right)\bar{i}_r + \sum_{j=1}^{m} \frac{1}{2} C_{oj} \frac{dv_{ojref}^2}{dt} + \frac{v_{ojref}^2}{r_{oj}} \qquad (17)$$

Expression (17) has the structure of an energy balance. On the right hand side, 'loss' terms are present. To be precise, from left to right: copper loss energy, virtual resonant tank energy, filter capacitor energy and load energy. The 'virtual' energy will be explained shortly. On the left hand side of (17) source terms are present. The left-most term is clearly the averaged input energy, while the right term represents the averaged stored resonant tank energy.

The virtual energy term with $\alpha$ turns out to be a safety measure. It represents the dynamics of the resonant tank in essence. The momentary resonant tank energy can not be viewed as a term completely available (to compensate instantaneously) for the loss energies, because when the tank is empty it must be charged, before it can transfer energy again.

The control parameter $\alpha$ is a function of $i_r$ (and vice versa) through the sliding surface and the state-space dynamics. The only problem to advance further into an explicit condition for $\alpha$ is that $i_r$ *is* a function of its own derivative; see (13). The resulting first order differential equation is difficult to solve analytically, due to the nonhomogeneous sinusoidal output terms.

The following simplification is justified by the fact that interest is in a (rough) design guidance value for $\alpha$; in practice the value for $\alpha$ will be tuned by observation. Returning to expression (13), the simplification consists of assuming zero ripple in $i_r(t)$, which makes the left hand side of (13) equal to 0. Rewriting (13) results in an approximate expression for $i_r$ *as* a function of $\alpha$:

$$\overline{i_r} \approx \sqrt{\frac{\alpha}{V_i - r_r \alpha} \sum_{j=1}^{m} P_{oj}} \qquad (18)$$

In (18), $P_{oj}$ replaces $\frac{1}{2} C_{oj} \frac{dv_{ojref}^2}{dt} + \frac{v_{ojref}^2}{r_{oj}}$. Substitution of (18) in (17) and rearranging terms leads to design condition (19).

$$\left(V_i - \frac{\pi^2}{4} \omega_c L_r \alpha\right)\left(\frac{\alpha}{V_i - r_r \alpha} \sum_{j=1}^{m} P_{oj}\right)^{\frac{1}{2}} >$$
$$\left(r_r - \frac{\pi^2}{4} \omega_c L_r\right)\left(\frac{\alpha}{V_i - r_r \alpha} \sum_{j=1}^{m} P_{oj}\right) + \sum_{j=1}^{m} P_{oj} \qquad (19)$$

In the following the previous design conditions are applied to a design example. Table 1 shows values for the parameters as introduced in Fig. 4.

Table I

Parameter values for two-clamp cable prototype as referred to in Fig. 4

| Symbol | QUANTITY | Value |
|---|---|---|
| $V_i$ | input DC voltage | 600 [V] |
| $L_r$ | input side leakage inductance | 40 [uH] |
| $r_r$ | Primary side winding resistance | 2 [$\Omega$] |
| $r_{o1}, r_{o2}$ | output load resistances | 240 [$\Omega$] |
| $\omega_c$ | radial resonant frequency | 100k [Hz] |
| $V_{o1}, V_{o2}$ | required output voltages | 240 [V] |
| $P_{o1}, P_{o2}$ | required output powers | 240 [W] |
| $n$ | number of clamps | 2 |

Stability is assured when (14) applies:

$$\alpha < \min\left\{\frac{600}{2}, \frac{600}{\frac{\pi^2}{4} 2\pi \cdot 10^5 \cdot 40 \cdot 10^{-6}}\right\} \approx 9.7$$

The sliding surface for the output exists if (15) holds, where expression (18) is substituted for $i_r$ :

$$\sqrt{\frac{\alpha}{600-2\alpha}480} > 1 \rightarrow \alpha > 1.24$$

The input sliding surface exists if (19) holds:

$$\left(600-\frac{\pi^2}{4}2\pi\cdot10^5\cdot40\cdot10^{-6}\cdot\alpha\right)\left(\frac{480\alpha}{600-2\alpha}\right)^{\frac{1}{2}} >$$

$$\left(2-\frac{\pi^2}{4}2\pi\cdot10^5\cdot40\cdot10^{-6}\right)\left(\frac{480\alpha}{600-2\alpha}\right)+480$$

$$\rightarrow 0.8 < \alpha < 9.7$$

Combining the previous conditions, the design solution gives:

$$1.24 < \alpha < 9.7 \hspace{4cm} (20)$$

Whereas $\alpha$ represents the fraction of the input energy that is used for the buffer energy in the tank, the best (i.e., most energy efficient) solution for $\alpha$ is the minimum allowed value in (20).

Figure 8 shows a flow chart of an embodiment of the above described method. A controlling method is used for controlling energy supplied by an electrical source to a resonant tank connectable to an electric load. The method comprises the step 100 of determining an energy amount to be supplied based on information of energy in the resonant tank.

Up to here the description relates to setting an $\alpha$ to be robust and essentially fixed, at a level for safe operation, basically based on a galvanic connection of a source to the network.

ADAPTIVE $\alpha$

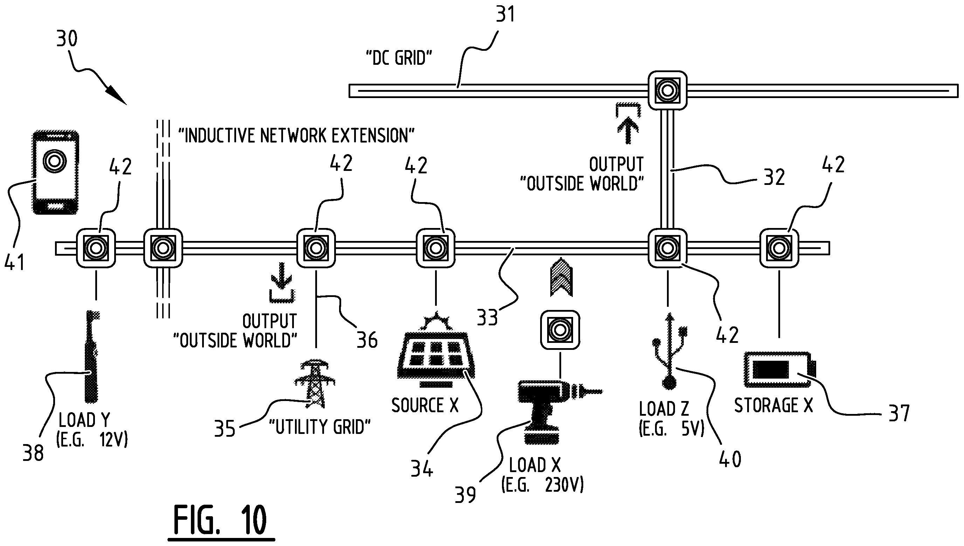

Building on the above theoretical basis, it was already indicated at a reference to figure 5 that the principles underlying the determination of a minimal and thus optimal $\alpha$ could additionally apply to a configuration with more than one source and one or more than one load. Additionally, a fixed $\alpha$ results in potentially rigid configurations, whilst it would be desirable to be able to use the system and method of the present disclosure also under varying circumstances, such as adding or removing loads and / or sources, with the same efficiency and keeping to the desires and objectives as set out above, of minimizing $\alpha$, while at the same time preventing instability of the control and ensuring that the buffer component doesn't become negative. Figure 10 exemplifies a more flexible network 30, enabling easy connection or disconnection of different types of loads, each having specific requirements in terms of connecting voltage or current, and sources, as well as storages. The system 30 can be connected to a DC grid 31 and a utility grid 35, from which the system can receive energy and to which energy can also be fed via respective connections 32, 36. The system has a back bone conductor 33, to which a source 34 and a buffer or storage 37 may be connected. Several types of loads may connected to the backbone conductor 33, such as a 12V (re)chargeable tooth brush 38, a 230V power tool 39, a 5V network apparatus 40, such as a 5V USB device, etc. A network controller 41 may be embodied in the form of an app on a mobile device. Each of these load apparatuses is connected to the backbone conductor 33, which could have a flexible or rigid form, via a coupler 42. In principle couplers or nodes 42 are the same for source and loads. Nodes 42 are autonomous in the sense that no data transfer is required between nodes and / or between sources and nodes and/or between sources. As a consequence the additional challenge of this more versatile configuration is how sources can determine autonomously (without data transfer) how much power they are to insert into the network over the backbone conductor 33, in a sufficient amount for all the loads to be able to function. Herein above prior art is described, which originates from the inventor's own previous publication WO-2011/031143, relating to a basic algorithm, system and method to determine a power need for all connected loads from a single source.

In order to allow for a desired degree of versatility, further developments have been contemplated. Therein, the network in its entirety is configured to distribute power in accordance with a novel and inventive algorithm from one or more than one source to one or more than one load.

Again it is assumed that a power requirement of all loads $\Sigma P_0$ together is available or can at least be deduced from the energy in the source, which may be a resonant tank or an arbitrary energy buffer of the network. Temporary energy storage or buffering appears to be very important though possibly not essential to the invention. This may point to an inductive network or as an alternative, potentially an adequate buffer connected to the backbone conductor 33 may suffice. In any case, where in the following description reference is made to a resonant tank in an inductive network, these exemplary features are not to be taken as limitations on the scope of protection.

A sliding surface equation for a source may be expressed, in line with the principles underlying the prior art discussed above, see formula (4) above. However, this is where all comparison ends:

$$S = \alpha \cdot E_{source} - E_{network, stored} \qquad (21)$$

Namely, in the prior art technology described above, the parameter $\alpha$ is constant and is determined beforehand, in advance of an actual use situation. The determination, beforehand, of the parameter $\alpha$ is based on expectations about maximum anticipated load power requirement ($\max\{\sum P_0\}$) in the network. Based on this assumption, control of the source in the network and the network itself will normally be robust and not lead to unstable operation. Determination beforehand of parameter $\alpha$ has a number of drawbacks.

A fixed value of $\alpha$ can result in a limitation on the degree to which the full source power can be deployed, so that a maximum less than full source power is available to be released onto the network.

The source cannot prevent that the assumed maximum load requirement $\max\{\sum P_0\}$ is exceeded, for example if more loads are connected to the backbone conductor 33.

An optimal value of $\alpha$ is, at any given time, determined by an actual value of a sum of all loads $\sum P_0$ rather than any expectation about a maximum $\max\{\sum P_0\}$ thereof. This has for a consequence that for all situations, wherein $\sum P_0 < \max\{\sum P_0\}$, efficiency is less than optimal for the network; more power is made available over the network than what is required to drive and supply power to the actually connected and combined loads.

Formula (21) does not suffice to tune $\alpha$ in operation and continuously to an instantaneous optimum thereof, taking the actually connected combined loads into account. Surprisingly, as it turns out, the information missing to be able to achieve instantaneous adaptation of $\alpha$ has been found to reside in formula 18 above, which is reproduced here for completeness, brevity and clarity:

$$\overline{i_r} \approx \sqrt{\frac{\alpha}{V_i - r_r \alpha} \sum_{j=1}^{m} P_{oj}} \qquad (18)$$

By further developing formula (21) above, it is obtained that:

$$S = \alpha \cdot \overline{\overline{u_p}} - \overline{\overline{i_r}} = 0 \qquad (22)$$

and by further assuming that S = 0, it is obtained that:

$$\overline{\overline{u_p}} = \sqrt{\frac{1}{\alpha(V_i - r_r \alpha)} \sum P_o} \qquad (23)$$

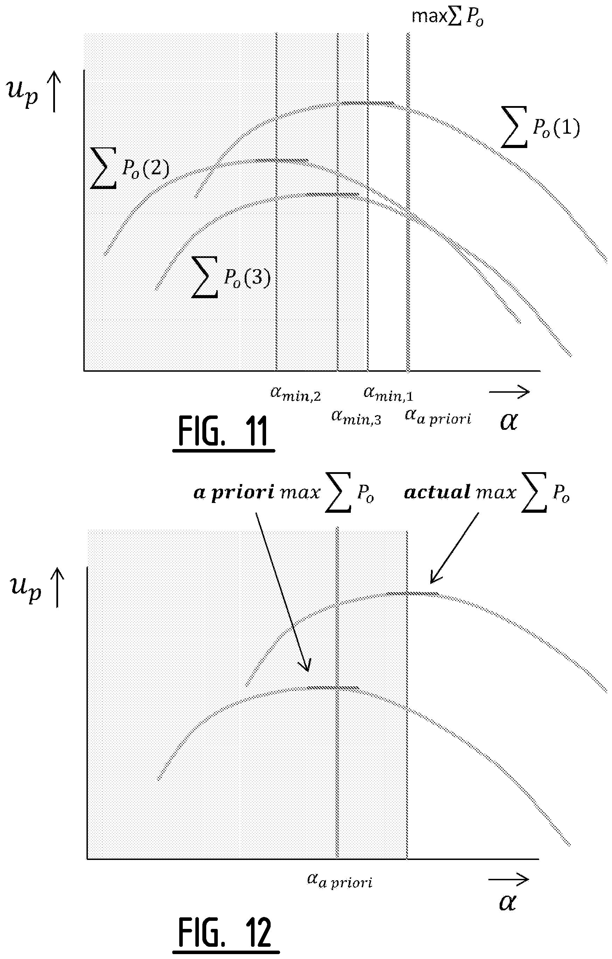

The graph in figure 11 provides relations between $\alpha$ and $u_p$ in accordance with equation (23), for three distinct load profiles $\sum P_0(1)$, $\sum P_0(2)$, and $\sum P_0(3)$. Also shown is $\max\sum P_0$, on which the prior art determination of a fixed $\alpha$ is based. It is evident, that in the prior art, $\alpha$ is determined at a level or value that is relatively high for all of the three distinct load profiles, indicating that energy supplied to the loads is too high for the actually connected loads according to each of the three load profiles $\sum P_0(1)$, $\sum P_0(2)$, and $\sum P_0(3)$. Thus efficiency is reduced.

In relation to each profile $\sum P_0(1)$, $\sum P_0(2)$, and $\sum P_0(3)$, there's a minimal $\alpha$ ($\alpha_{min, x}$), at which there's certainty that the source and the controller thereof insert precisely enough power into the network for all actually connected loads in combination, and as little more as is needed to prevent with certainty that the unstable state, referred to above, occurs.

On the other hand, to be able to set a beforehand determined value of $\alpha$ as a fixed parameter, this value needs to be set higher than a maximum value of $\alpha$ at any load situation, which could be referred to as $\max(\alpha_{min, x})$. Such a "maximal minimum" would therefore correspond with a maximum load $\max\sum P_0$. At such a value of $\alpha$, network efficiency would be less than optimal for all of the potentially realistic power profiles. However, this issue can be addressed using an adaptive approach to $\alpha$. In figure 11, the precise load profile is not known beforehand. However, it is known in advance of any load profile potentially occurring, that the following functioning occurs:

$$\alpha = \alpha_{min,x} \leftrightarrow stabiel \ \& \ \eta_{max} \qquad \text{stability and high efficiency}$$
$$\alpha > \alpha_{min,x} \leftrightarrow stabiel \ \& \ \eta\downarrow \qquad \text{Stability, but reduced } \eta$$
$$\alpha < \alpha_{min,x} \leftrightarrow instabiel \qquad \text{Unstable, or even instable}$$

The source has no control over the amount or power requirement of connectable or even connected loads. As a consequence, stabile and highly efficient, inefficient but stable and unstable behavior may occur, in particular respectively when:

$$\alpha = \alpha_{min,x} \leftrightarrow stabiel \ \& \ \eta_{max}$$

$$\alpha > \alpha_{min,x} \leftrightarrow stabiel \ \& \ \eta\downarrow$$

$$\alpha_{a \ priori} < \alpha_{min,x} \leftrightarrow instabiel$$

However, it is uncertain in which area or zone operation of the system is, when it isn't known how many loads are actually connected and what the respective power requirement(s) thereof is/are, as there is no communication about such aspects over the backbone conductor 33.

The graph of figure 12 clearly exhibits that an unwanted unstable situation may occur unpredictably and undesirably in the prior art, if more loads are connected than anticipated or at least if the power requirement of the actually connected load(s) exceed(s) the anticipated max$\{\sum P_0\}$.

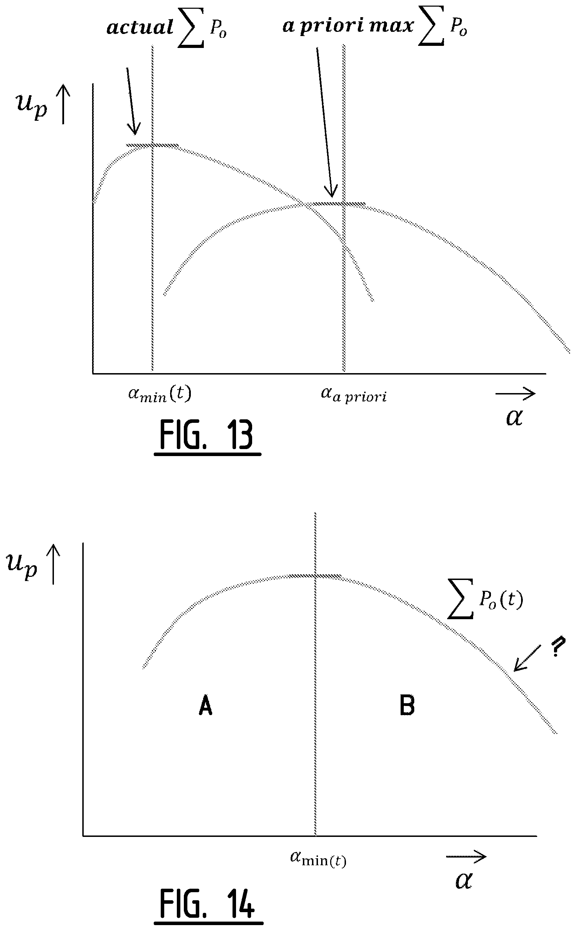

One further result of the prior art worst case approach, according to which the predetermined fixed $\alpha$, which is calculated and then fixed a priori, may be much higher than required for an actually connected (amount of) load at any given time ($\alpha_{a \ priori} \gg \alpha_{min}(t)$), as shown in figure 13, is considerable efficiency loss and costs, although the system remains to be stable.

The above described basic disclosure of WO-2011/031143 refers to adaptive control, but in fact, due to fixing $\alpha$ at a value determined a priori and then set, there's no temporal adaptation of $\alpha$.

Therefore, the core issue underlying the present disclosure is how to enable determination of $\alpha_{min}(t)$; how is it possible to determine between area's A (unstable) and B (stable) in figure 14. The answer to this question is not in formula (22) above. This formula (22) only reveals a single point (at the questions mark "?" in Figure 14), while the rest of the shape and form of the graph associated with the determined point is unknown. In fact, the entire curve is unknown, which can also be the reason for the indication of a question mark in figure 14.

The solution to this challenge turned out to reside in formula (18) above, as already indicated. This will be explained herein below.

In area B of figure 14, the total load power may be assumed constant, based for area B on:

$$\frac{\delta \sum P_o(t)}{\delta\alpha} = 0 \qquad (24)$$

This formula (24) results, based on formula (23) above, in

$$\overline{u_p}^2 \cdot \alpha \equiv constant \qquad (25)$$

This formula (25) only holds in area B of figures 14 - 16. By continuously varying $\alpha$, which can be achieved by varying $u_p$, the following algorithm in formula (26) provides a proper indication of the direction (decrease /increase) in which $\alpha$ needs to be varied further to most closely approximate the most optimal and stable value:

$$\left(\mathrm{sign}\left(\frac{\delta u_p(\alpha)}{\delta t}\right) < 0 \;\; \mathrm{OR} \;\; \mathrm{sign}\left(\frac{\delta\alpha(u_p)}{\delta t}\right) > 0\right) \qquad (26)$$

As long as the criterion of formula (25) is complied with, it may be established that:

$$\alpha \gtrsim \alpha_{min}(t) \qquad\qquad (27)$$

and $\alpha_{min}$ (t) can be sought using formula (26).

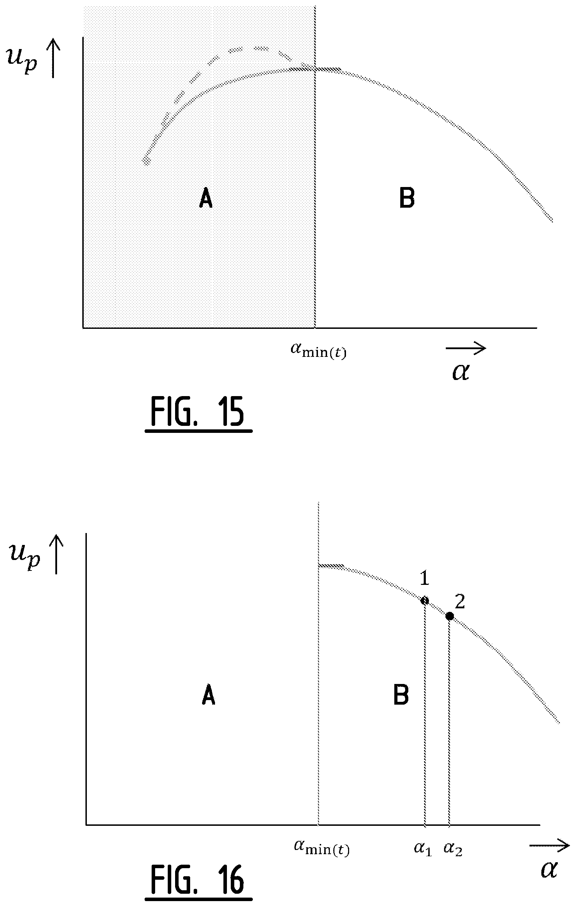

This is precisely what was sought. However, from the bulge shaped anomaly in the left hand side of figure 15, indicated by the dashed line therein, it will be evident to the skilled person that the criterion of formulae 25 may be complied with, and that it could be then erroneously be assumed that formula (27) also holds. However, based on the notion that formula (25) only holds in area B of figures 14 - 16, the error can be prevented. Apparently, it does not suffice to determine $\alpha_{min}(t)$ by maximizing $u_p$. After all, in area A in figures 14 and 15, the shape of the graph is not fixed and may vary, which is why the bulge shaped anomaly is represented in the dashed line graph shape in figure 15. The reason for this is that in area A the load power has become a function of $\alpha$ and consequently of the power in time, depending on $\alpha$: $\sum P_0(\alpha, t)$. In other words, the maximum of $u_p$ could be in area A, as shown at the bulge shaped, dash lined anomaly in the graph of figure 15, as indicated in the dashed line, even though the conditions of formulae (25) and (26) are met.

Although the bulge shape in dashed line is referred to above as an anomaly, this is not precisely correct as it is simply the curve in area A, having a higher $MAX(u_P)$ than at the sought $\alpha_{min}(t)$, thus rendering a strategy of maximizing $u_P$ to escape from area A unworkable.

The shape of the curve [$\alpha$, $u_P$] in area B of figures 14 and 15 is to a considerable degree fixed, and is defined in equation 23 above. However, as an absolute value of $\sum P_0$ is unknown, the controller is unable to determine a current position on the curve in area B, as shown in figure 16. On the other hand, surprisingly, this position does not necessarily have to be determined precisely in order to arrive at a determination of $\alpha_{min}(t)$. To determine an $\alpha_{min}(t)$ it suffices - again surprisingly - to have the shape of the curve in figure 16. By slightly varying $\alpha$, from $\alpha 1$ to $\alpha 2$ in figure 16 or vice versa, the effect on $u_P$ becomes apparent, as it changes from point 1 on the curve to point 2 (or vice versa). Thus, by varying $\alpha$, the shape of the curve becomes apparent, at least in and for area B, and then $\alpha$ can be adapted further to approximate $\alpha_{min}(t)$ better, by hollowing the shape of the curve in the predicted direction, which is to the left in figure 16, by decreasing the value of $\alpha$. In fact this finding is the algorithm of formula (26) above.

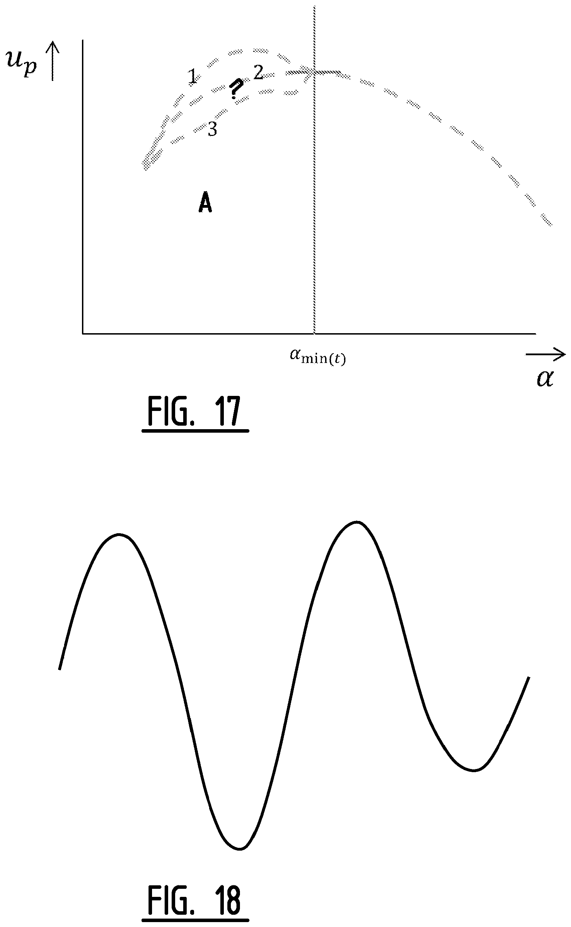

In contrast, and as shown in figure 17, the shape of the curve in area A to the left of the unknown $\alpha_{min}(t)$ is unknown. Figure 17 exemplifies some of the erratic shapes that the curve can have in area A. This is understandable from the fact that the sliding surface equation 22 above does not hold in area A. Most often, the behavior may follow curve 2 in figure 17. However, the occurrence of curve 1 cannot be excluded.

As a first strategy to try to resolve this matter, the skilled person may decide to maximize $u_P$, which could resolve for curves 2 and 3 in figure 17, but not for curve 1. Although this obvious strategy may succeed in some situations, it would not be robust for all situations, such as for curve 1 in figure 17.

To resolve this issue, surprisingly the solution is provided on the basis of the fact that in area A, behavior does not follow the sliding surface equation 22 above, and behavior does not follow formula (25). In other words, in area A the curve is not the one of area B, and/or formula (25) does not hold in area A, because $\sum P_0$ varies in area A. A reason why the curve can exhibit erratic shapes in area A is because instantaneous power input into conductor 33 at any given time is $P_i = u_P * V_i * i_r$. In the sliding surface equation 22 above, resonant current is shared by all sources and loads. All of the deductions from equation 22 rely on the assumption of a small ripple on the amplitude of the resonant current $i_r$, whereas this holds true to a larger or lesser extent, depending on the low-level switch-modulation method.

In short, and in simplified representation, when a series $u_P = [1, 0, 1]$ (on average 2/3) occurs with averaged $i_r = [1, 3, 1]$, this yields less input power $P_i = 2$ than in a situation wherein $u_p = [0, 1, 0]$ (on average 1/3) and averaged $i_r = [1, 3, 1]$, yielding $P_i = 3$. As a consequence, it is possible to provide relatively less energy at a relatively high average of $u_P$.

Further, it is assumed that $\sum P_0$ does not vary faster than a rate of variation of $\alpha(t)$. This is considered to be a consequence of an actual difference in desired power delivery. This result in a further requirement:

$$\frac{\delta\alpha}{\delta t} \gg \frac{\delta \sum P_o}{\delta t} \qquad\qquad (28)$$

Yet, $\alpha(t)$ should not vary too quickly, as formula (22) must have time to stabilize to zero, which involves reaching phase in sliding mode control:

$$\frac{\delta \alpha}{\delta t} \ll t(S \rightarrow 0) = t\left(\left\{\alpha \cdot \overrightarrow{u_p} - \overrightarrow{i_r}\right\} \rightarrow 0\right) \quad (29)$$

In summary: for a predetermined $\alpha$, this will be robust only if $\Sigma P_0(\infty) < \max\Sigma P_0$, but involves a loss of efficiency $\eta$ if at any given time $\Sigma P_0(t) < \max\Sigma P_0$. The minimum of $\alpha$ at any given time can always be robust and at all times secure optimal network efficiency. In order to determine, it is proposed to vary $\alpha$, or varying any of

In case that $\alpha$ is in the undesired area A, the algorithm of

$$\mathrm{sign}\left(\frac{\delta u_p(\alpha)}{\delta t}\right) < 0 \ \mathrm{AND} \ \frac{\delta\left(\overrightarrow{u_p}^2 \cdot \alpha\right)}{\delta t} = 0 \quad (30)$$

can resolve a strategy to bring $\alpha$ in the stable area B. If a change in $U_p$ results in an increase of $\alpha$, then a further change in the same direction of $U_p$ is tried to see if that yields a further increase of $\alpha$.

The adaptive controlling method for controlling energy supplied by an electrical source to a resonant tank connectable to an electric load can be performed using dedicated hardware structures, such as FPGA and/or ASIC components. Otherwise, the method can also at least partially be performed using a computer program product comprising instructions for causing a processor of the computer system to perform the above described one or more steps of the method according to the invention. All steps can in principle be performed on a single processor. However, it is noted that at least one step can be performed on a separate processor, e.g. the step of minimizing a buffer component of the resonant tank energy.

MULTI SOURCE APPROACH

Reverting to the configuration of figure 10, multiple sources are connected, such as DC grid 31, source X 34, utility grid 35 and storage X 37. A source can have a double role as energy can be supplied for example to a utility grid 35, then acting as a load, and at other times the utility grid 35 may supply energy. The same holds for a battery that may charge or discharge to respectively act as a load and a source.

The network primarily serves to transfer power from at least one source to a number of loads (including zero loads). The at least one source and the number of loads are connected inductively via nodes 42. Each node is autonomous, avoiding a need for any information exchange between nodes 42. In the inventor's own previous prior art disclosure WO-2011/031143 a basic approach is described to determine a required amount of power for all of the connected load nodes.

However, in WO-2011/031143, the source was coupled to the network via a galvanic connection. Referring back to formulae (1c) and (1d) above, P designated power transferred through the tank and E designated energy stored on the tank. Through deductions a sliding surface was determined that

$$S = E / P - C \quad (31)$$

based on the notion that stored energy should be available in an amount related to transferred power via a fixed ratio C. In a preferred situation energy stored in the tank should approximate zero, but for a reliable and correct functioning a small buffer amount should be available in the tank.

As mentioned above, the starting point of the disclosure of WO-2011/031143 is a galvanic connection of the source to the network. Below, this starting point does not apply and the source or sources will be connected through a galvanic connection or inductively to the network. For the below discussion, an inductive connection is assumed, though the disclosure is not limited thereto. To this end a source node comprises a capacitor to define the resonant tank with the inductance of the network. In a case of a plurality of nodes, there's no singular source. Therefore the above sliding surface needs some adjustment, but still holds for a plurality of inductively coupled sources.

$$S = \frac{E_{t,stored}}{P_t} - C \quad \Longrightarrow \quad S = \frac{E_{network,stored}}{P_{network}} - C \quad (32)$$

A preceding implementation of the sliding surface equation 21 above is provided in formula 22, based on a

simplification:

$$S = \alpha \cdot \overline{\overline{u_p}} - \overline{\overline{i_r}} = 0 \qquad (22)$$

However, here (with more than one source):

$$\beta \cdot i_{r^2} \neq E_{network,stored} \qquad (33)$$

in which β defines a constant related to tank inductance. However, the following equation does hold:

$$\beta \cdot i_{r^2} = E_{network,throughput} + E_{network,stored} \qquad (34)$$

An average current amplitude through the resonant tank inductance corresponds with the sum of the energy through the tank and energy stored in the tank. A more formal definition of eq. 34 is therefore:

$$S = \gamma(t) \cdot E_{network,throughput} - \beta(E_{network,throughput} + E_{network,stored}) \qquad (35)$$

Rewriting eq. 35 to the format of eq. 21 results in:

$$S = \left(\frac{\gamma(t)-\beta}{\beta}\right) \cdot E_{network,throughput} - E_{network,stored} \qquad (36)$$

Therein,

$$\frac{\gamma(t)-\beta}{\beta} = \alpha(t) \quad.$$

In an inductively coupled multi-source configuration, for a single source node j, the sliding surface can be expressed as:

$$S_j = \alpha_j(t) \cdot E_{source,j} - E_{network,stored} \qquad (37)$$

Therein, $E_{source}$, j is the total input power. In a configuration of a plurality of sources:

$$S_j = \alpha_j(t) \sum_i E_{source,i} - E_{network,stored} \quad (j=0..i) \qquad (38)$$

The challenge in this approach resides in the fact that in the sliding surface j for multiple sources:

$$S_j = \alpha_j(t) \cdot \left(E_{source,j} + \sum_{i \neq j} E_{source,i}\right) - E_{network,stored} \qquad (39)$$

the summation $\sum_{i \neq j} E_{source,i}$ is not known for source j. Source node j has no direct knowledge about energy supplied by each of the other source nodes connected to the inductive network.
As a solution to this challenge, the summation $\sum_{i \neq j} E_{source,i}$ is determined indirectly. By reverting to sliding surface equation (21):

$$S = \alpha(t) \cdot E_{source} - E_{network, stored} \qquad (21)$$

The basic idea of this sliding surface is the definition of a relationship between power going through the tank, and power stored in the tank and elsewhere in storages or sources connected to the network.

It should be noted that in case of multiple sources, these may be approximated as a single distributed source. Thus reference here to the tank implies the combined sources connected to the network, but not forming part of the network. The distributed sources are each connected inductively to the network in order to avoid - in the case of direct connection of the multiple sources - that the entire network needs to be shut down when one source fails. As a consequence, a node connecting a source to the network comprises a resonant capacitor to generate a resonant current. Further, the reference to power going through the tank and stored in the tank is therefore to be interpreted as referring to the combined sources, inductively coupled to the network via the resonant capacitors in each of the source connecting nodes, and themselves therefore outside the network.

The ratio between these powers through and stored in the "tank" defines as, assuming S = 0 for the most efficient result:

$$\alpha(t) = \frac{E_{network,stored}}{E_{network,throughput}} \qquad (40)$$

As a further clarification, it is noted that $E_{source} \equiv E_{network,throughput}$, since power going through "the tank" equals power supplied by the combined sources.

Again reverting to eq. 21, yields:

$$S_{network} = \alpha_j(t) \cdot \Sigma_i E_{source,i} - E_{network,stored} \qquad (41)$$

Since it is of no importance which source (node) delivers the required amount of energy. As a consequence each individual source node can rely on the same surface form:

$$S_j = \alpha_j(t) \cdot \left( E_{source,j} + \Sigma_{i \neq j} E_{source,i} \right) - E_{network,stored} \qquad (42)$$

Therein, $\alpha_j(t)$ is not necessarily the same for each source node, and hence the subscript j, since for each source node the ratio $\alpha_j(t)$ may converge to it's own optimum, as disclosed above.

Again assuming S=0, based on

$$E_{source,j} + \Sigma_{i \neq j} E_{source,i} = E_{network,throughput} \qquad (43)$$

an unknown portion of supplied source power can be determined through analysis of the resonant tank.

In order to be able to determine $E_{network}$, throughput this term must be separated from $E_{network,\ stored}$, again using eq. 22:

$$S = \alpha \cdot \overline{\overline{u_p}} - \overline{\overline{i_r}} = 0 \qquad (22)$$

At the stage of developments of obtaining eq. 22, the aforementioned separation was not yet necessary, since for a single source the value of $E_{network,\ throughput}$ is known. For a plurality of sources (source nodes) it will therefore be necessary to determine (by measurement) peak-difference values, in addition to amplitude measurement of $i_r$. These measurements together characterize the behaviour of the combined total tank or combination of source nodes.

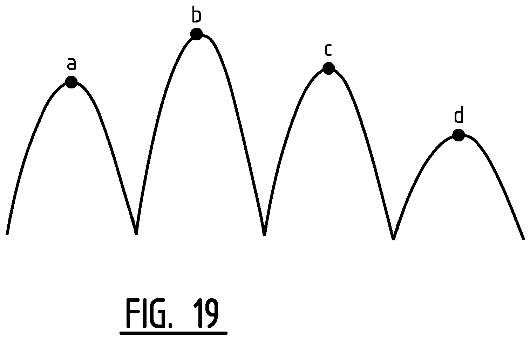

Figure 18 exhibits measured $i_r$ (or $V_{cr}$). Figure 19 exhibits the absolute values of the measured values.

Energy stored in the tank per resonant half period can be determined based on peak-difference measurements. Energy passing through the tank per resonant half period can be characterized by the amplitude - peak difference measurements.

For these measurements, as an alternative for $i_r$, voltage $V_{cr}$ over the resonant capacities may be employed as an alternative for current through the network $i_r$. To enhance robustness and accuracy, a combination of both measurements may be employed.

In figure 19, the amplitude measurements may follow the sequence from a to b to c to d. The peak difference measurement follow (a - ?) to (b - a) to (c - b) to (d - c). The peak difference measurements are based on $i_r$ or $V_{cr}$ as these provide an indication of $E_{network,\ stored}$, and the peak difference measurements reflect changes in the sliding surface equation. Successive values thereof change and the changes indicate changes in $E_{network,\ stored}$ and quantify the resulting changes $\alpha$. By monitoring the peak differences, it's turned out to be possible to monitor $\alpha$.

In relation to the multi source approach, it is noted that the sources may be galvanic connected or inductively connected to the network via nodes, just like the loads, in contrast with the prior art according to WO-2011/031143, where it was implicitly assumed that the source was connected directly and in series to the network itself. In a multi-source approach, any defect of a source or source node would necessarily result in shut down, pending repairs. By inductive coupling of the source(s), an adaptation of the remaining sources to supply a desired amount of energy to the network will be possible.

Inductively connected source(s) (nodes) result in a consideration that the physical location of the source(s) (nodes) does not actually matter. In such inductively connected sources, a node may be equipped with a (resonant) capacitor, for example on the primary side of the source node. Equally, a resonant capacitor may be provided on the network side.

Nevertheless, the present disclosure also encompasses configurations having a plurality of sources physically connected to the network, and thus physically part of the network, rather than being inductively coupled thereto.

One of the basic concepts of the present multi source approach of this disclosure is that one or more than one source will send a quasi-sinusoidal current through the network, potentially using one or more than one resonant capacitor. The sinusoidal shape of the network current an/or of the voltage over the (resonant) capacitor(s) reveals characteristics of the loads and other sources connected to the network, which can be used based on amplitude and peak-difference determination, because in a multi source configuration, the simplification of eq. 22 does not apply. The contribution of each source is not known at any of the other sources. To resolve for this challenge, the network current characteristics or those of the voltage $V_{cr}$ over the resonant capacities can yield the necessary information to allow each of the sources to optimise its corresponding contribution and maintain a sufficient supply over the network to each load.

The invention is not restricted to the embodiments described herein. It will be understood that many variants are possible. For instance and without limitation:

It is noted that the electric supply network according to the invention might in principle be arranged in building rooms having an arbitrary room geometry, such as in a house or in an office, or even outside where inductive coupling has specific benefits, such as less susceptibility to water, cold and the like.

It is further noted that the resonant tank can be formed otherwise, e.g. as a capacitor arranged in parallel with the coil of the electric supply line. Further, the electrical loads might be arranged in parallel with the resonant tank. The resonant tank can not only be implemented as a first order LC-circuit but also as a higher order circuit including more than two reactive elements.

It is also noted that, as an alternative to an inductive connection, one or more electrical loads might be connected to the resonant tank by using an electrically conducting connection without eliminating the operation of the adaptive controller according to the invention.

**Claims**

1. A method of controlling power input into an energy transferring resonant inductive network, the network comprising:

- a resonant tank exhibiting a resonance frequency; and
- a number of power consuming loads connected to the resonant tank at the resonance frequency, and being connected with at least one energy source comprising at least a converter connecting the source to the network, and configured to convert energy from the source into energy having a central frequency at the resonance frequency of the resonant tank, wherein the method comprises:

- determining an amount of power to be input by the source into the network by adaptively balancing energy of the source $E_{source}$ against energy in the network $E_{network}$, **CHARACTERISED BY**

varying, during energy transfer to the number of power consuming loads, at least a sliding-mode control input $u_p$ for the converter;
determining whether a balance factor $\alpha$ increases or decreases with the variation of the control input ($u_p$); and
varying at least the control input ($u_p$) further to approximate a minimum value of the balance factor ($\alpha$), at which

$$\alpha \ * \ E_{source} \ = \ E_{network},$$

and assuming

$$\overline{u_p}^2 \cdot \alpha \equiv constant \; .$$

**2.** The method of claim 1, further comprising varying the control input ($u_p$) more quickly than any change in a sum of power drawn from the network by the at least one load ($\Sigma P_0$).

**3.** The method of claim 2, further comprising varying the control input ($u_p$) slow enough to allow a sliding surface condition to stabilize, with the sliding surface condition representing a system comprising the at least one source and the network.

**4.** The method of at least one of claims 1, 2 and 3, further comprising: determining if the varied at least one of the control input ($u_p$) and the balance factor ($\alpha$) yields unstable operation, and varying the varied at least one of the control input ($u_p$) and the balance factor ($\alpha$) at an accelerated pace towards more stable operation.

**5.** The method of at least one of the preceding claims, comprising: for each of a plurality of sources connected to the network independently, determining the minimal value of the balance factor ($\alpha$) separately for energy throughput through the network and energy stored in the network.

**6.** The method according to claim 5, further comprising measuring peak-difference values of network current or of resonant capacitor voltage in addition to amplitude measurements, to enable adaptive optimization of the ratio between energy throughput through the network and energy stored therein, in relation to each source independently.

**7.** A controller configured to perform the method of any one or more than one of the preceding claims 1 - 5.

**8.** A network comprising a controller according to claim 7 .


**Patentansprüche**

**1.** Verfahren zur Steuerung der Leistungszufuhr in ein energieübertragendes induktives Resonanznetzwerk, wobei das Netzwerk aufweist

    - einen Schwingkreis, der eine Resonanzfrequenz aufweist; und
    - eine Anzahl Strom verbrauchender Lasten, die mit dem Schwingkreis bei der Resonanzfrequenz verbunden sind und mit mindestens einer Energiequelle verbunden sind, die mindestens einen Wandler aufweist, der die Quelle mit dem Netzwerk verbindet und so ausgebildet ist, dass er Energie von der Quelle in Energie umwandelt, mit einer Mittenfrequenz bei der Resonanzfrequenz des Schwingkreises,
    wobei das Verfahren die folgenden Schritte aufweist:

    Bestimmen einer von der Quelle in das Netzwerk einzuspeisenden Menge an Leistung durch adaptives Ausgleichen von Energie der Quelle $E_{Quelle}$ gegen Energie im Netzwerk $E_{Netzwerk}$
    **GEKENNZEICHNET DURCH**
    Variieren mindestens eines Gleitmodus-Steuereingangs $u_p$ für den Wandler während der Energieübertragung an die Anzahl der leistungsverbrauchenden Lasten;
    Bestimmen, ob ein Ausgleichsfaktor $\alpha$ mit der Variation des Steuereingangs ($u_p$) zunimmt oder abnimmt; und weiteres Variieren zumindest des Steuereingangs ($u_p$), um sich einem Minimalwert des Ausgleichsfaktors (a) anzunähern, bei dem gilt

$$\alpha * E_{Quelle} = E_{Netzwerk} \; ,$$

    und
    unter der Annahme, dass

$$\bar{u}_p{}^2 * \alpha \equiv konstant.$$

**2.** Verfahren nach Anspruch 1, ferner aufweisend das Variieren des Steuereingangs ($u_p$) schneller als jede Änderung einer Summe der von der zumindest einen Last aus dem Netzwerk bezogenen Leistung ($\sum P_0$).

3. Verfahren nach Anspruch 2, ferner aufweisend, den Steuereingang ($u_p$) so langsam zu variieren, dass sich ein Gleitflächenzustand stabilisieren kann, wobei der Gleitflächenzustand ein System darstellt, das die zumindest eine Quelle und das Netzwerk umfasst.

4. Verfahren nach mindestens einem der Ansprüche 1, 2 und 3, ferner aufweisend das Ermitteln, ob der variierte mindestens eine von Steuereingang ($u_p$) und Ausgleichsfaktor ($\alpha$) einen instabilen Betrieb ergibt, und Variieren des variierten mindestens einen von Steuereingang ($u_p$) und Ausgleichsfaktor (a) mit erhöhter Geschwindigkeit hin zu einem stabileren Betrieb.

5. Verfahren nach zumindest einem der vorherigen Ansprüche, aufweisend das unabhängige Bestimmen des Minimalwertes des Ausgleichsfaktors (a) getrennt für den Energiedurchsatz durch das Netzwerk und die im Netzwerk gespeicherte Energie für jede einer Mehrzahl an Quellen, die unabhängig voneinander an das Netzwerk angeschlossen sind.

6. Verfahren nach Anspruch 5, wobei zusätzlich zu den Amplitudenmessungen Spitzen-Differenzwerte des Netzwerkstroms oder der Resonanzkondensatorspannung gemessen werden, um eine adaptive Optimierung des Verhältnisses zwischen Energiedurchsatz durch das Netzwerk und darin gespeicherter Energie zu ermöglichen, und zwar unabhängig in Bezug auf jede Quelle.

7. Steuerung, die so konfiguriert ist, dass sie in der Lage ist, das Verfahren nach einem oder mehreren der vorherigen Ansprüche 1 bis 5 durchzuführen.

8. Netzwerk mit einer Steuerung nach Anspruch 7.

**Revendications**

1. Procédé de commande d'entrée d'énergie dans un réseau inductif résonnant transférant de l'énergie, le réseau comprenant :

un circuit résonnant présentant une fréquence de résonance ; et
un certain nombre de charges consommatrices d'énergie raccordées au circuit résonnant à la fréquence de résonance,
et étant raccordé à au moins une source d'énergie comprenant au moins un convertisseur couplant la source au réseau, et configuré de manière à convertir l'énergie de la source en énergie présentant une fréquence centrale égale à la fréquence de résonance du circuit résonnant, dans lequel le procédé comprend :

la détermination d'une quantité d'énergie à introduire par la source dans le réseau en équilibrant de manière adaptative l'énergie de la source $E_{source}$ par rapport à l'énergie dans le réseau $E_{réseau}$,
**caractérisé par**
la modification, au cours du transfert d'énergie aux différentes charges consommatrices d'énergie, d'au moins une entrée de commande de mode de glissement up pour le convertisseur ;
la détermination du fait qu'un facteur d'équilibre $\alpha$ augmente ou diminue avec la variation de l'entrée de commande ($u_p$) ; et
la modification d'au moins l'entrée de commande ($u_p$) afin de se rapprocher davantage d'une valeur minimum du facteur d'équilibre (a), pour lequel

$$\alpha * E_{source} = E_{réseau},$$

et
en supposant

$$\overline{u_p}^2 \cdot \alpha \equiv \text{constante}$$

**2.** Procédé selon la revendication 1, comprenant, en outre, la modification de l'entrée de commande ($u_p$) de manière plus rapide qu'une variation quelconque d'une somme d'énergie absorbée à partir du réseau par la au moins une charge ($\sum P_0$).

**3.** Procédé selon la revendication 2, comprenant, en outre, la modification de l'entrée de commande ($u_p$) suffisamment lentement pour permettre la stabilisation d'une condition de surface de glissement, la condition de surface de glissement représentant un système comprenant la au moins une source et le réseau.

**4.** Procédé selon au moins l'une des revendications 1, 2 et 3, comprenant, en outre : la détermination du fait que le au moins un de l'entrée de commande ($u_p$) et du facteur d'équilibre (a) modifié conduit à un fonctionnement instable, et la modification du au moins un de l'entrée de commande ($u_p$) et du facteur d'équilibre (a) modifié à un rythme accéléré afin d'assurer un fonctionnement plus stable.

**5.** Procédé selon au moins l'une des revendications précédentes, comprenant : pour chacune d'une pluralité de sources raccordées indépendamment au réseau, la détermination de la valeur minimale du facteur d'équilibre (a) de manière séparée pour l'énergie circulant à travers le réseau et l'énergie stockée dans le réseau.

**6.** Procédé selon la revendication 5, comprenant, en outre, la mesure des valeurs de différence de crête du courant de réseau ou de la tension de condensateur résonnant en plus des mesures d'amplitude, afin de permettre l'optimisation adaptative du rapport entre la sortie d'énergie à travers le réseau et l'énergie stockée à l'intérieur de ce dernier, de manière indépendante en fonction de chaque source.

**7.** Unité de commande configurée de manière à exécuter le procédé selon l'une quelconque ou plusieurs des revendications 1 à 5 précédentes.

**8.** Réseau comprenant une unité de commande selon la revendication 7.

## FIG. 1

FIG. 2

FIG. 3

FIG. 4

DC source
{V1+, V1-}

$E_{in}$

C    L

$E_{out}$

DC load 1
{0,V2+, V2-}

DC load 1
{0,V3+, V3-}

$E_{out}$

## FIG. 5

11

10    21    23

20

22

## FIG. 6

FIG. 7

FIG. 8

FIG. 9A

FIG. 9B

FIG. 9C

FIG. 10

EP 3 465 870 B1

$\mathrm{max}\sum P_o$

$u_p$ ↑

$\sum P_o(2)$

$\sum P_o(1)$

$\sum P_o(3)$

$\alpha_{min,2}$     $\alpha_{min,1}$
$\alpha_{min,3}$    $\alpha_{a\,priori}$     $\alpha$

## FIG. 11

**a priori** $max \sum P_o$     **actual** $max \sum P_o$

$u_p$ ↑

$\alpha_{a\,priori}$     $\alpha$

## FIG. 12

$$actual \sum P_o \qquad a\,priori\,max \sum P_o$$

$u_p \uparrow$

$\alpha_{min}(t)$       $\alpha_{a\,priori}$       $\overrightarrow{\alpha}$

## FIG. 13

$u_p \uparrow$

$\sum P_o(t)$

$?$

A       B

$\alpha_{min(t)}$       $\overrightarrow{\alpha}$

## FIG. 14

FIG. 15

FIG. 16

$u_p$

1
?
2
3

A

$\alpha_{\min(t)}$

$\alpha$

FIG. 17

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011031143 A
- WO 2008149275 A